# EUROPÄISCHE PATENTSCHRIFT

(11) **EP 1 154 442 B1**
(45) Veröffentlichungstag und Bekanntmachung des Hinweises auf die Patenterteilung: **22.03.2006**
(21) Anmeldenummer: 01108904.2
(22) Anmeldetag: 10.04.2001
(51) Int. Cl.: H01C 10/46, H01C 10/30

(54) **Variabler Widerstand und damit versehener Spannungsteiler, Leiterplatte und zahnärztliches Gerät**
Variable resistor and voltage divider comprising the same, printed circuit and dentist tool
Résistance variable et diviseur de tension comportant celle-ci, circuit imprimé et appareil dentaire

(30) Priorität: 10.04.2000 DE 10017511
(43) Veröffentlichungstag der Anmeldung: 14.11.2001
(73) Patentinhaber: Sirona Dental Systems GmbH, 64625 Bensheim (DE)
(72) Erfinder: Nickel, Bernd, 64646 Heppenheim (DE); Stein, Ulf, 64689 Grassellenbach (DE)
(74) Vertreter: Sommer, Peter

(56) Entgegenhaltungen:
- EP-A- 0 202 764
- DE-A- 4 101 120
- DE-C- 545 858
- DE-U- 29 520 454

## Beschreibung

### Technisches Gebiet

Die Erfindung betrifft einen variabler Widerstand, umfassend eine Kontaktbahn mit mindestens zwei durch einen Spalt von einander abgegrenzten Bereichen mit jeweils einem zugeordneten elektrischen Widerstand, weiterhin umfassend mindestens einen an den mindestens zwei Bereichen der Kontaktbahn entlang bewegbaren Kontakt mit einer zur Kontaktbahn hin angeordneten Kontaktfläche.

Die Erfindung betrifft auch einen Spannungsteiler, aufweisend einen elektrischen Eingang, einen elektrischen Ausgang und eine elektrische Erdung, sowie mehrere Bereiche mit zugeordneten elektrischen Widerständen wie vorstehend beschrieben.

Weiterhin betrifft die Erfindung eine Leiterplatte mit elektrischen und mechanischen Bauteilen und einem variablen Widerstand und/oder einem Spannungsteiler wie vorstehend beschrieben.

Schließlich ist ein zahnärztliches Gerät mit einem Schalter zur Schaltung mehrerer elektrischer Zustände Gegenstand der Erfindung, welches einen wie vorstehend beschriebenen elektrischen Widerstand und/oder einen Spannungsteiler und/oder eine Leiterplatte umfasst.

### Stand der Technik

Aus der DE U-2,9520,454 ist ein zahnärztliches Spritzhandstück bekannt, welches eine Leiterplatte mit einer oder mehreren Widerstandsbahnen und mit diesen zusammenwirkenden Kollektorbahnen zur Steuerung der Heizleistung für ein Heizelement aufweist. Die Widerstandsbahn ist neben einer Kollektorbahn angeordnet, wobei ein mit Schleifkontakten versehener, die beiden Bahnen überbrückender und beweglich gelagerter Schleiferträger vorgesehen ist. Die Leiterplatte ist in einem Ventilkörper des Handstücks gehaltert, wozu der Ventilkörper entsprechende Ausnehmungen aufweist. Im übrigen ist eine ausführliche Beschreibung des zahnärztlichen Spritzhandstückes vorgenommen, wie auch in der DE-C-195 48 444 oder in der DE-U-295 20 455. Der Offenbarungsgehalt dieser Schriften wird voll umfänglich in die Anmeldung einbezogen.

Ein nach den dort offenbarten Prinzipien hergestelltes zahnärztliches Spritzhandstück hat als variablen Widerstand eine Kohleschichtbahn, was beim Bestücken der Leiterplatte eine hohe Positionsgenauigkeit erfordert, um die Lage des Nullpunkts in etwa festzulegen. Darüber hinaus ist ein Laserabgleich des Gesamtwiderstands notwendig und der elektrische Nullpunkt bzw. die Endlage des Schleifers muß mechanisch eingestellt werden. Die Einstellelemente reagieren empfindlich auf äußere Einflüsse wie Erschütterungen oder Materialermüdung, insbesondere der Federn. Der Übergangswiderstand von der Schleiffeder zu der Widerstandsbahn ist wegen des Abriebs der Alterung unterworfen und kann Fehlfunktionen zur Folge haben. Da ein Neuabgleich der Kohleschichtbahn als variabler Widerstand nicht möglich ist, ist der Austausch der gesamten auf der Leiterplatte montierten Inneneinheit erforderlich.

Die mit der Bewegung des Schleifkontakts verbundene Änderung des Widerstands wird als elektrisches Signal erfasst und zur Schaltung von elektrischen Verbrauchern verwendet.

Die Aufgabe besteht darin, einen variablen Widerstand bereitzustellen, der diese Nachteile vermeidet und eine höhere Lebensdauer bei sicheren Kontaktierung und fertigungstechnisch vorgegebenen Spaltbreiten bereitstellt.

Aus der DE 35 11 872 A1 und aus der DE 545 858 C ist ein variabler Widerstand bekannt. Die Spaltgeometrie und die Kontaktfläche sind derart ausgebildet, dass der Kontakt im Bereich des Spaltes zunächst mit dem ersten der dem Spalt benachbarten Bereiche in elektrischer Verbindung steht, anschließend mit beiden Bereichen gleichzeitig und weiter fortschreitend in der Bewegung nur mit dem zweiten Bereich.

### Darstellung der Erfindung

Gemäß der Erfindung, wie in Anspruch 1 definiert, weist der geometrische Verlauf des Spaltes zumindest teilweise eine Richtungskomponente in Richtung der Bewegungsrichtung des Kontaktes auf.

Ein derart ausgebildeter variabler Widerstand hat den Vorteil, dass die durch den Herstellprozess vorgegebene Spaltbreite zwischen den Bereichen des variablen Widerstands kein Hindernis für eine sichere Kontaktierung mit einer Kontaktfläche, deren Dicke geringer als die Spaltbreite ist ermöglicht, ohne dass der Kontakt hängen bleibt oder einhakt. Die Kontaktfläche liegt damit zu jedem Zeitpunkt des Überstreichens des Spaltes auf einem der beiden benachbarten Bereiche auf, ohne in den Spalt einzutauchen.

Dadurch ist selbst die Verwendung einer Kratzschleifer-Feder als Kontaktfeder möglich, die gegenüber der Kontaktfläche selbstreinigend ist. Gegenüber einer Gleitschleifer-Feder hat die Kratzschleifer-Feder den Vorteil, dass bei Verschleiß der Kontaktfläche keine Abbrechen eines Federteils zu befürchten ist.

Vorteilhafterweise sind die Bereiche durch einen ausschließlich Richtungskomponenten in und quer zur Bewegungsrichtung aufweisenden Spalt voneinander abgegrenzt. Alternativ hierzu ist auch ein sägezahnartig oder mäanderförmig verlaufender Spalt geeignet.

Dadurch, dass der Spalt eine dem jeweiligen Abstand der Bereiche entsprechende Spaltbreite aufweist, dass die Kontaktfläche eine erste Abmessung in Bewegungsrichtung, die Dicke, und eine zweite Abmessung quer zur Bewegungsrichtung, die Breite aufweist, dass die Spaltbreite größer als die Dicke der Kontaktfläche ist und dass die Breite des Kontakts größer als eine größte quer zur Bewegungsrichtung vorliegende Weite des vom Kontakt überstrichenen Spaltes ist, wird sichergestellt, dass der Kontakt nicht in den relativ weiten Spalt hineinfällt, was insbesondere die Verwendung einer Kratzschleifer-Feder mit sehr kleiner Kontaktfläche und die daraus resultierenden Formteile ermöglicht.

Ein weiterer Gegenstand der Erfindung ist ein Spannungsteiler wie in Anspruch 4 definiert, der einen vorstehend beschriebenen Widerstand mit mindestens vier Bereichen aufweist. Durch die Überlappung des Kontakts im Übergang zwischen zwei Bereichen wird der jeweilige dem Bereich zugeordnete Widerstand kurz geschlossen, wodurch sich die Spannungsteilungsverhältnisse ändern. Bei vier Bereichen können so bis zu fünf unterschiedliche Spannungen realisiert werden.

Eine erfindungsgemäße Leiterplatte, wie in Anspruch 5 definiert, kennzeichnet sich durch einen variablen Widerstand mit dem vorstehend beschriebenen Merkmal und/oder durch einen vorstehend beschriebenen Spannungsteiler aus. Die Kontaktbahn mit den entsprechenden Bereichen ist direkt auf die Leiterplatte aufgebracht, vorzugsweise zusammen mit den Widerständen und den übrigen Anschlüssen für weitere elektronische Bauteile. Über die mechanische Bauteile erfolgt die Bewegung des Kontakts entlang der Kontaktbahn.

In einer vorteilhaften Weiterbildung verfügt die Leiterplatte über mechanische Bauteile, über welche die Bewegung des Kontakts und eine Steuerung des Durchflusses eines oder mehrerer flüssiger oder gasförmiger Medien bewirkt wird. Durch die Kopplung der unterschiedlichen elektrischen Signale an eine Durchflußsteuerung wird die Betätigung von elektrischen Bauteilen in Abhängigkeit des Durchflusses möglich.

Vorteilhafterweise sind als elektronische Bauteile Leuchtmittel und/oder Heizmittel im Einsatz.

Bei einem erfindungsgemäßen zähnärztlichen Gerät, wie in Anspruch 8 definiert, mit einem Schalter zur Schaltung mehrerer elektrischer Zustände ist die Verwendung eines vorbeschriebenen variablen Widerstands und/oder eines Spannungsteilers und/oder einer Leiterplatte mit einer Verbesserung beim Zusammenbauen und Justieren des Geräts gegeben, da umständliche Justierarbeiten entfallen. Die Schaltzustände sind klar definiert, was den besonderen sicherheitstechnischen Anforderungen entgegenkommt.

Das zahnärztliche Gerät selbst ist im zitierten Stand der Technik in seiner Funktionsweise ausführlich beschrieben, so dass hierauf Bezug genommen wird.

Vorteilhafterweise weist das zahnärztliche Gerät Mittel zur Abgabe von relativ kleinen Mengen von flüssigen oder gasförmigen Medien wie Wasser oder Luft unter Aufheizung des Mediums auf, da hier ein Zusammenhang zwischen der Abgabe des Mediums und elektrischen Verbrauchern besteht.

Gemäß einer Weiterbildung wird in Abhängigkeit von der Durchflußvorgabe für das oder die Medien eine elektrisch verarbeitbare Größe abgeleitet, die einer bestimmten Heizleistung zum Aufheizen des Mediums entspricht.

### Kurzbeschreibung der Zeichnung

Ein Ausführungsbeispiel der Erfindung ist in der Zeichnung dargestellt. Es zeigt die
- Fig. 1: einen Ausschnitt einer Leiterplatte mit einem variablen Widerstand und einem Schiebeschalter, die
- Fig. 2: einen Schaltplan ohne Leiterplatte, die
- Fig. 3: eine erste Ausführungsform des Kontaktes mit einer Kontaktfedern in Form eines Kratzschleifers, die
- Fig. 4: eine weitere Ausführungsform des Kontaktes in Form eines Gleitschleifers, die
- Fig. 5: eine erste Ausführungsform eines Spaltes auf einer Kontaktbahn, die
- Fig. 6: eine zweite und dritte Ausführungsform des Spaltes mit den dazugehörigen Abmessungen, die
- Fig. 7a, b: ein prinzipielles Schaltbild eines elektrisch variablen Widerstandes und die dazugehörige Ausführung und die
- Fig. 8a: einen prinzipiellen Schaltplan eines Spannungsteilers und ein Ausführungsbeispiel unter Verwendung eines variablen Widerstandes entsprechend Fig. 7.

### Ausführungsbeispiel der Erfindung

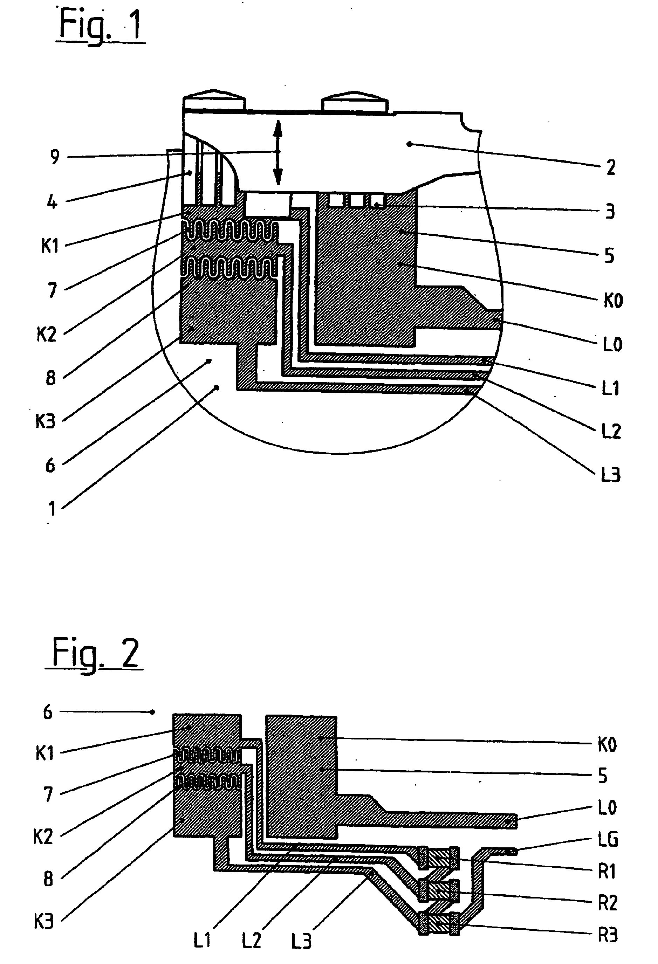

In Fig. 1 ist ein Ausschnitt einer Leiterplatte 1 gezeigt, auf der eine elektrische Schaltung aufgedruckt ist. An der Leiterplatte entlang bewegbar ist ein Schleiferträger 2 befestigt, an dem wiederum mehrere Kontakte 3, 4 angebracht sind.

Auf der Leiterplatte 1 sind zwei Kontaktbahnen 5, 6 aufgebracht, an denen die an dem Schleiferträger 2 befestigten Kontakte 3, 4 aufliegen. Die Kontaktbahn 6 ist in drei Bereiche K1, K2, K3 unterteilt, die jeweils durch einen Spalt 7, 8 elektrisch voneinander isoliert sind. Der Spalt 7, 8 wird im folgenden noch ausführlicher erläutert werden. Die Bereiche K1, K2, K3 der Kontaktbahn 6 sind mit Leitungen L1, L2, L3 verbunden, die Kontaktbahn 5, die aus einem einzigen Bereich K0 besteht, ist mit einer Leiterbahn L0 verbunden.

Der Schleiferträger 2 läßt sich in Richtung des Pfeiles 9 an der Leiterplatte 1 entlang bewegen und dreht sich dabei um einen nicht dargestellten Drehpunkt. Der Schleiferträger wird dabei gegen ein nicht dargestelltes Federmittel bewegt, welches eine Zwangsrückführung des Schleiferträgers in die dargestellte Ausgangsposition gewährleistet.

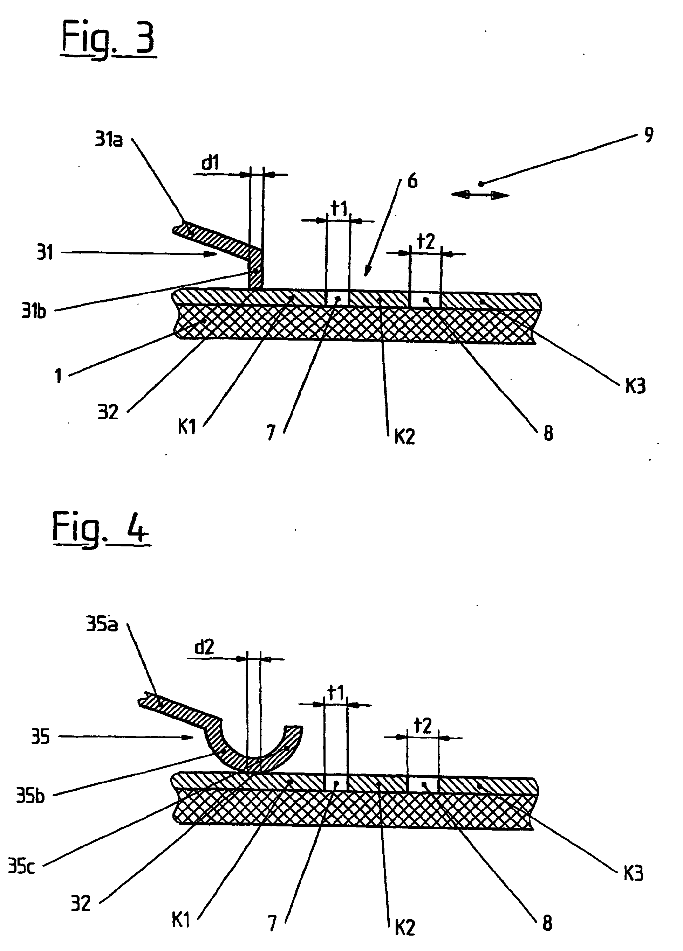

Der Kontakt 3, 4 besteht aus mehreren einzelnen Federzungen, die in Fig. 3 und 4 näher beschrieben werden.

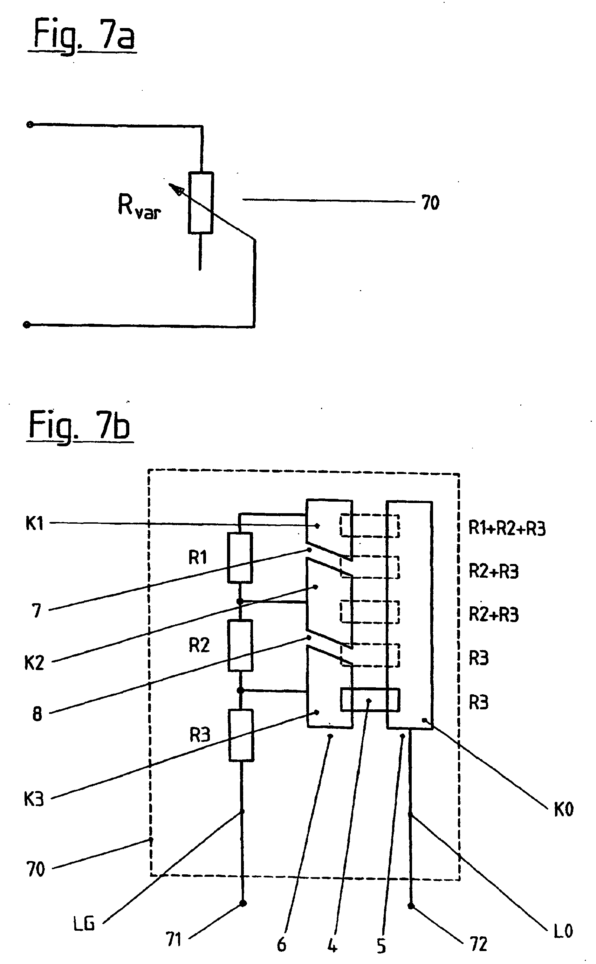

In Fig. 2 ist ein Schaltplan ohne Leiterplatte und Schleiferträger dargestellt. Zur erkennen sind die Kontaktbahnen 5, 6, wobei die Kontaktbahn 6 mittels der Spalten 7, 8 in drei Bereiche K1, K2, K3 unterteilt ist. Von jedem der Bereiche K0, K1, K2, K3 geht eine Leitung L0, L1, L2, L3 ab, wobei die Breiche K1, K2, K3 mit Widerständen R1, R2, R3 verbunden sind. Die Widerstände R1, R2, R3 sind in Reihe angeordnet, so dass sich eine in Fig. 7b dargestellte Schaltung ergibt.

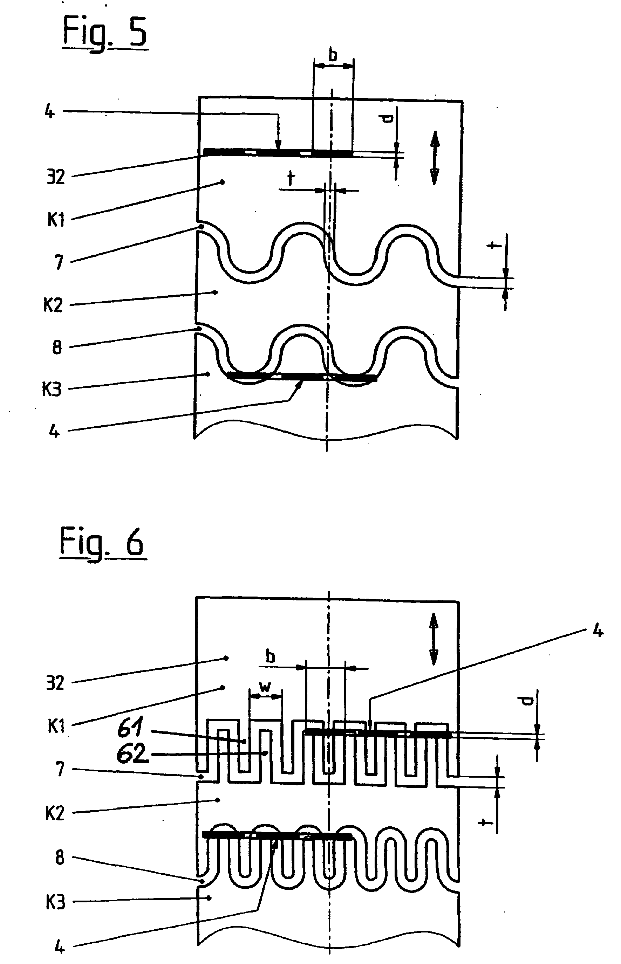

In Fig. 3 ist eine Ausführungsform des Kontakts gezeigt, wobei der Kontakt eine Kontaktfeder 31 in Form eines Kratzschleifers aufweist, d.h., dass die Kontaktfeder in einen elastischen Abschnitt 31a und ein im wesentlichen senkrecht zur Bewegungsrichtung 9 biegesteifes Endteil 31b unterteilt ist. Das Endteil 31b trägt eine Kontaktfläche 32, welche eine Dicke D1 aufweist. Die Kontaktfläche befindet sich in elektrisch leitender Anlage auf dem Bereich K1 der Kontaktbahn 6, die auf der Leiterplatte 1 angeordnet ist und kann in Richtung des Pfeiles 9 auf der Kontaktbahn 6 entlang verschoben werden. Dabei muß die Kontaktfeder 31 über die Spalte 7, 8 sicher geführt werden. Die Spalte 7, 8 weisen eine Spaltbreite T1, T2 auf, welche größer als die Dicke D1 des Kontakts 31 ist. Die hierzu erforderlichen Maßnahmen sind in den Fig. 5 und 6 beispielhaft dargestellt. Eine Bewegung des Kontakts in Richtung des Pfeils 9 verschiebt den Kontakt in dem Bereich K2 und über den Spalt T2 hinweg in den Bereich K3.

In Fig. 4 ist eine andere Ausführungsform der Kontaktfeder dargestellt, versehen mit dem Bezugszeichen 35. Die Kontaktfeder 35 ist als Gleitschleifer ausgebildet mit einem elastischen Bereich 35a und einem gebogenen Endstück 35b, wobei sich die Kontaktfläche 32 in einem mittleren Bereich befindet, an den sich ein aufgebogenes Ende von 35c anschließt.

Der konzeptionelle Unterschied zwischen einem Kratzschleifer und einem Gleitschleifer besteht darin, dass der Kratzschleifer aufgrund der schabenden Wirkung an der Kontaktfläche 32 von Verunreinigungen befreit und eine sichere elektrische Kontaktierung herstellt, wobei ein Verschleiß der Kontaktfläche 32 lediglich ein Nachlassen des Anpreßdrucks zur Folge hat. Beim Gleitschleifer hingegen führt ein Abrieb im Bereich der Kontaktfläche 32 zu einer Schwächung des gekrümmten Endbereichs 35b, 35c, was zu einem Abbrechen des Endes 35c führen kann, wenn die Materialschwächung einen gewissen Wert überschritten hat. Darüber hinaus ist die Selbstreinigung des Gleitschleifers nicht so ausgeprägt wie beim Kratzschleifer, so dass der Übergangswiderstand an der Kontaktfläche stärker schwanken kann.

Auch bei dem Ausführungsbeispiel mit Gleitschleifer 35 wird der Kontakt über die Spalte 7, 8 von dem Bereich K1 in den Bereich K2 und K3 verschoben. Die Spaltbreite T1, T2, die fertigungstechnisch vorgegeben ist, ist größer als die Dicke D der Kontaktfläche 32, so dass zusätzliche Maßnahmen ergriffen werden, um ein Eintauchen und Einhaken des Kontaktes in den Spalt 7, 8 zu verhindern.

Diese zusätzlichen Maßnahmen sind in Fig. 5 und Fig. 6 dargestellt und bestehen darin, dem Spalt 7, 8 einen bestimmten Verlauf zu geben um zu gewährleisten, dass der Kontakt im Bereich des Spaltes zunächst mit dem ersten Bereich in elektrischer Verbindung steht, anschließend mit beiden Bereichen gleichzeitig und weiter fortschreitend in der Bewegung nur mit dem zweiten Bereich K2. Hierzu weist der geometrische Verlauf des Spaltes eine Richtungskomponente in Richtung der Bewegungsrichtung des Kontaktes auf, so dass sich ein schräger oder gekrümmter Verlauf ergibt. Der Kontakt besteht aus drei Kontaktfedern, welche in Kontaktflächen 32 mit einer Dicke d und Breit b enden und auf dem Kontaktbereich K1 aufsitzen. Beim Verschieben des Kontakts 4 wird die Kontaktfläche 32 in die Nähe des Spaltes 7 gebracht und muß über diesen hinweg geführt werden, ohne in den Spalte 7 einzutauchen oder sich dort zu verhaken. Die Kontaktfläche 32 ist demnach so in ihren Abmessungen zu dimensionieren, dass beim Überqueren des Spaltes 8 eine Auflage in mindestens einem Bereich K1, K2, K3 sichergestellt ist, wobei in einem Übergangsbereich, dargestellt in der unteren Bildhälfte, eine elektrischer Kontakt mit zwei Bereichen K2, K3 hergestellt ist.

Im Ausführungsbeispiel gemäß Fig. 6 ist der zeitweise Kontakt mit 2 Bereichen K1, K2 bzw. K2, K3 über eine längere Verschiebestrecke ausgebildet als gemäß Fig. 5. Darüber hinaus weist die Kontaktfläche 32 eine Breite b auf, welche größer als die größte Spaltweite w des Spaltes 7 ist. Der Spalt 7, 8 ist mäanderförmig ausgebildet, wodurch die Bereiche K1, K2 miteinander verkämmt sind. Diese Verkämmung führt zu wechselseitig angeordneten Zähnen 61, 62, von denen der Zahn 61 zum Bereich K1 und der Zahn 62 zum Bereich K2 gehört. Gelangt der Kontakt 4 mit seinen an dem Enden von drei Kontaktfedern liegenden Kontaktflächen 32 in den Bereich des Spaltes 7, so wird die Kontaktfläche 32 auf dem Zahn 61 bei fortschreitender Verschiebung sicher geführt, bis die Kontaktfläche auf die Zähne 62 des benachbarten Bereichs K2 zur Auflage gelangt. In dieser Lage findet sowohl eine elektrische Kontaktierung des Bereichs K1 als auch des Bereichs K2 über die Kontaktfläche 32 statt. Beim weiteren Verschieben des Kontaktes 4 wird das Ende des Zahns 61 erreicht, die Kontaktfläche 32 liegt nunmehr ausschließlich auf den Zähnen 62 des Bereichs K2 auf und wird an dem noch verbleibenden Spalt weitergeführt um dann auf den vollflächigen Bereich K2 zu gelangen.

Im oberen Teile der Fig. 6 weist der Spalt ausschließlich Richtungskomponenten in und quer zur Bewegungsrichtung des Kontakts auf, im unteren Bereich ist ein mäanderförmig verlaufender Spalte dargestellt. Darüber hinaus sind sägezahnartig verlaufende Spalte vorstellbar oder auch ein einfach schräg verlaufender Spalt, so lange sichergestellt ist, dass die Dimensionierung der Kontaktfläche ein Eintauchen in den Spalt verhindert.

In Fig. 7a ist ein prinzipielles Schaltbild eines variablen Widerstands gezeigt, in Fig. 7b die Ausführung eines variablen Widerstands gemäß der Erfindung. Der variable Widerstand 70 wird durch drei Widerstände R1, R2, R3 gebildet, die in Reihe geschaltet sind und die mit den Bereichen K1, K2, K3, der Kontaktbahn 6 verbunden sind. Die Verbindung erfolgt der Gestalt, dass der Bereich K1 mit dem Eingang von R1 verbunden ist, dass der Bereich K2 zwischen der elektrischen Verbindung von R1 mit R2 verbunden ist und dass der Bereich K3 mit der elektrischen Verbindung zwischen R2 und R3 verbunden ist. Am Ausgang von R3 ist dann der Ausgang 71 des variablen Widerstands 70 mittels einer Leitung LG bezeichnet. Die Bereiche K1, K2, K3 werden über einen Kontakt 4 mit einer Kontaktbahn 5 mit einem Bereich K0 elektrisch leitend verbunden, wobei die Kontaktbahn K0 mit einem Leiter L0 den Eingang 72 des variablen Widerstands bildet. Es versteht sich von selbst, dass Eingang und Ausgang beliebig vertauschbar sind.

Der Kontakt 4 kann über die Kontaktbahnen 5 und 6 verschoben werden und nimmt dabei verschiedene Positionen ein, die gestrichelt eingezeichnet sind. In der mit ausgezogener Linie dargestellten unteren Position des Kontaktes 4 wird ein Stromkreis hergestellt, der von der am Eingang 72 angeordneten Leitung L0 über die Kontaktbahn 5 mit dem Bereich K0 eine elektrische Verbindung mit dem Bereich K3 der Kontaktbahn 6 herstellt, wobei der Bereich K3 mit dem Widerstand R3 elektrisch verbunden ist und über die Leitung LG eine Verbindung zum Ausgang 71 hergestellt ist. Die Widerstände R2, R1 sind elektrisch isoliert, da die Kontaktbahn 6 in drei Bereiche K1, K2, K3 unterteilt ist, welche durch einen schräg verlaufenden Spalt 7, 8 gegeneinander abgegrenzt sind. Wird der Kontakt 4 in die nächste dargestellte Position verschoben, übergreift also den Spalt 8 und liegt auf den Bereichen K2 und K3 gleichermaßen auf, so wird zwar der Widerstand R2 elektrisch verbunden, der Gesamtwiderstand ändert sich aber nicht, da der Strom den Weg des geringsten Widerstandes nimmt und nach wie vor nur über R3 fließen wird.

Dies ändert sich dann, wenn die Zwischenstellung verlassen wird und der Kontakt 4 vollständig auf dem Bereich K2 aufliegt. In dieser Lage ist der Bereich K3 elektrisch isoliert, wie auch der Bereich K1, so dass ein Gesamtwiderstand R2 + R3 vorliegt.

Ein weiteres Verschieben des Kontakts 4 so, dass der Spalt 7 überbrückt wird und der Kontakt 4 zum Teil auf dem Bereich K2 und zum Teil auf dem Bereich K1 aufliegt, schließt die elektrische Verbindung zu dem Bereich K1, ändert aber den Gesamtwiderstand von R2 + R3 noch nicht.

Erst wenn der Kontakt 4 vollständig auf dem Bereich K1 aufliegt, wird der Bereich K2 elektrisch isoliert und der Strom muß nun den Weg über R1, R2 und R3 gehen, so dass sich ein Gesamtwiderstand von R1 + R2 + R3 ergibt.

Mit der gezeigten Anordnung lassen sich also drei verschiedene Widerstandswerte einstellen, R3, R2 + R3 und R1 + R2 + R3.

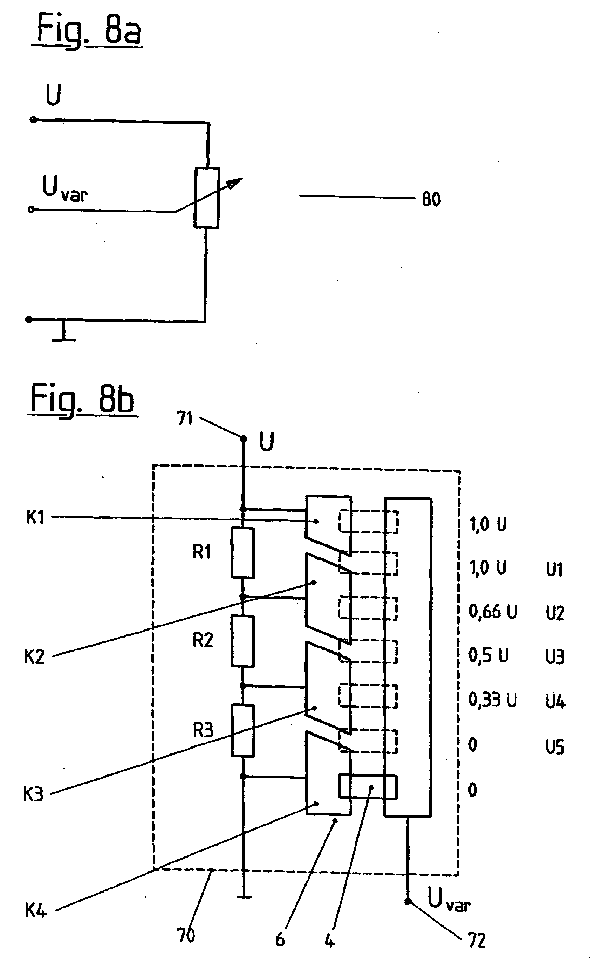

In Fig. 8a ist ein Spannungsteiler 80 als prinzipielles Schaltbild angegeben, der in Fig. 8b näher erläutert wird. Zu erkennen ist in der Darstellung der variable Widerstand 70, der in seinem Aufbau der Fig. 7b entspricht, allerdings in seiner Kontaktbahn 6 eine weitere Kontaktfläche K4 aufweist, welche mit dem Ausgang des Widerstand R3 verbunden ist. Den eingezeichneten Positionen des Kontakts 4 ist eine nach der Spannungsteilerformel berechnete variable Spannung zugeordnet, wobei hier vorausgesetzt ist, dass die Widerstände von R1, R2 und R3 gleich sind. Mit den vier Kontaktbereichen und den drei Widerständen lassen sich fünf verschiedene Spannungen U1 bis U5 bereitstellen, je nach Lage des Kontaktes 4. Diese Zustände werden im Nachfolgenden erläutert. In der unteren Position des Kontakts 4 auf dem Bereich K4 der Kontaktbahn 6 wird der Spannungsteiler ausgehend von der Eingangsspannung U mit dem Grund kurzgeschlossen, die variable Spannung U(var) beträgt 0. Wird der Kontakt in eine erste Zwischenposition verschoben, in welcher der Kontakt 4 den Bereich K4 und den Bereich K3 sowie den dazwischen liegenden Spalt gleichzeitig übergreift, so wird zwar eine elektrische Verbindung zwischen dem Bereich K3 hergestellt, die variable Spannung U(var) beträgt aber nach wie vor noch 0, da der Widerstand R3 kurzgeschlossen ist.

Wenn der Kontakt 4 so verschoben wird, dass er ausschließlich auf dem Bereich K3 aufliegt, so ergibt sich nach der Spannungsteilerformel bei drei identischen Widerständen R1, R2, R3 eine variable Spannung U(var) von 0,33 U. Wird der Kontakt 4 weiter verschoben, so dass er den Bereich K3 und K2 sowie den dazwischen liegenden Spalt überdeckt, so wird der Widerstand R2 kurzgeschlossen und nach der Spannungsteilerformel ergibt sich für die variable Spannung ein Wert von 0,5 U. Wird der Kontakt 4 entlang der Kontaktbahn 6 auf den Bereich K2 verschoben, so ergibt sich wiederum unter Anwendung der Spannungsteilerformel eine variable Spannung von 0,67 U.

Sobald der Kontakt 4 in elektrischer Verbindung mit dem Bereich K1 steht, werden die Widerstände R1, R2, R3 kurzgeschlossen und die variable Spannung beträgt U. Dieser Zustand wird auch dann erreicht, wenn der Kontakt 4 vollständig in dem Bereich K1 aufliegt.

Insgesamt lassen sich mit dem um einen Bereich K4 erweiterten variablen Widerstand fünf verschiedene Spannungszustände herstellen, was eine Ausweitung des Einsatzbereichs für eine elektrische Steuerung bedeutet. Der Kontakt wird wie ein Schiebeschalter bewegt und ist in seiner Funktion ein Stufenschalter, im vorliegenden Fall mit Zwangsrückführung durch eine nicht dargestellte Feder.

Selbstverständlich können auch unterschiedliche Widerstandswerte R1, R2 und R3 verwendet werden, so dass die gewünschten Eigenschaften eingestellt werden können.

Die Ausbildung des variablen Widerstands mit abgegrenzten Bereichen K1, K2, K3 (und gegebenenfalls K4) definieren mechanisch exakt die damit verbundenen Widerstände und vermeiden damit die Nachteile einer Kohleschichtbahn als variabler Widerstand. Durch die Wahl der Genauigkeitsklasse der Widerstände kann der gewünschte Widerstandswert der Schaltstufe im Falle des variablen Widerstands beziehungsweise der Spannungswert im Fall des Spannungsteilers der jeweils geforderten Genauigkeit angepasst werden. Insbesondere die Verwendung von Widerständen in einer Genauigkeitsklasse von 1% bietet eine für viele Anwendungen ausreichend hohe Genauigkeit.

Die Anzahl der Bereiche oder Kontaktpunkte innerhalb einer Kontaktbahn ist beliebig wählbar und nur durch den Bauraum begrenzt, so dass vielfältige Einsatzmöglichkeiten gegeben sind.

Wesentlich ist, dass die zumindest teilweise schräge Anordnung des Spaltes zwischen den Bereichen der Kontaktbahn trotz der endlichen Breites des Schleifers keine Kontaktunterbrechung entstehen. Um niedrige Übergangswiderstände und eine hohe mechanische Resistenz sicher zu stellen sind die Bereiche K1 bis K3 hartvergoldet, wobei die Größenordnung der Übergangswiderstände in einem Bereich liegen, der im Vergleich zu den Werten der Widerstände R1, R2, R3 unbedeutend und damit vernachlässigbar ist. Die Ausführung der Kontaktfeder als Kratzschleifer hat den Vorteil, dass neben der Selbstreinigung nur ein kleiner Bauraum erforderlich ist, wobei durch den Einsatz mehrerer Kontaktfeder die Kontaktsicherheit weiter verbessert werden kann.

### Bezugszeichenliste

- 1: Leiterplatte
- 2: Schleiferträger
- 3: Kontakt
- 4: Kontakt
- 5: Kontaktbahn
- 6: Kontaktbahn
- 7: Spalt
- 8: Spalt
- 9: Pfeil mit der Bewegungsrichtung
- 31: Kontaktfeder
- 31a: elastischer Abschnitt
- 31b: Endteil
- 32: Kontaktfläche
- 35: Kontaktfeder
- 35a: elastischer Bereich
- 35b: Endstück
- 35c: aufgebogenes Ende
- 70: Variabler Widerstand
- 71: Eingang/Ausgang
- 72: Eingang/Ausgang
- 80: Spannungsteiler
- K1: Bereich
- K2: Bereich
- K3: Bereich
- K0: Bereich
- L0: Leitung
- L1: Leitung
- L2: Leitung
- L3: Leitung
- LG: Leitung
- R1: Widerstand
- R2: Widerstand
- R3: Widerstand
- D1: Dicke der Kontaktfläche
- B: Breite der Kontaktfläche
- T1: Spaltbreite
- T2: Spaltbreite
- W: Freie Spaltweite
- U(var): variable Spannung
- U: Spannung
- U1-U 5: Spannung

## Patentansprüche

1. Variabler Widerstand (70), umfassend eine Kontaktbahn (6) mit mindestens zwei durch einen Spalt (7,8) von einander abgegrenzten Bereichen (K1, K2, K3) mit jeweils einem zugeordneten elektrischen Widerstand (R1, R2, R3), weiterhin umfassend mindestens einen an den mindestens zwei Bereichen (K1, K2, K3) der Kontaktbahn (6) entlang bewegbaren Kontakt (4) mit einer zur Kontaktbahn (6) hin angeordneten Kontaktfläche (32), wobei die Geometrie des Spalts (7,8) und die Kontaktfläche (32) derart ausgebildet sind, dass der Kontakt (4) im Bereich des Spaltes (7) zunächst mit dem ersten (K1) der dem Spalt (7) benachbarten Bereiche (K1, K2) in elektrischer Verbindung steht, anschließend mit beiden Bereichen (K1, K2) gleichzeitig und weiter fortschreitend in der Bewegung nur mit dem zweiten Bereich (K2), **dadurch gekennzeichnet, dass** der geometrische Verlauf des Spaltes (7,8) zumindest teilweise eine Richtungskomponente in Richtung der Bewegungsrichtung des Kontaktes aufweist.

2. Variabler Widerstand (70) nach Anspruch 1, **dadurch gekennzeichnet, dass** mindestens zwei Bereiche (K1, K2) miteinander verkämmt sind und durch einen mäanderförmig, sägezahnartig oder nach Art einer Rechteckschwingung ausgebildeten Spalt (7), der sich quer zur Bewegungsrichtung der Kontaktflächen (32) erstreckt, voneinander getrennt sind.

3. Variabler Widerstand (70) nach Anspruch 2, **dadurch gekennzeichnet, dass** der Spalt (7,8) eine dem jeweiligen Abstand der Bereiche (K1, K2, K3, K4) entsprechende Spaltbreite (T) aufweist, dass die Kontaktfläche (32) eine erste Abmessung in Bewegungsrichtung, die Dicke (D), und eine zweite Abmessung quer zur Bewegungsrichtung, die Breite (B), aufweist, dass die Spaltbreite (T) größer als die Dicke (D) des Kontakts ist, dass die Breite (B) der Kontaktfläche (32) größer als eine größte quer zur Bewegungsrichtung vorliegende Weite (W) des vom Kontakt (4) überstrichenen Spaltes (7,8) ist.

4. Spannungsteiler (80), aufweisend einen elektrischen Eingang (71), einen elektrischen Ausgang (72) und eine elektrische Erdung, sowie mehrere Bereiche (K1, K2, K3, K4) mit zugeordneten elektrischen Widerständen (R1, R2, R3), **gekennzeichnet durch** einen variablen Widerstand (70) nach Anspruch 3 mit mindestens vier Bereichen (K1, K2, K3, K4)

5. Leiterplatte (1) mit elektrischen und mechanischen Bauteilen, **gekennzeichnet durch** einen variablen Widerstand (70) nach einem der Ansprüche 1 bis 3 und/oder **durch** einen Spannungsteiler (80) nach Anspruch 4.

6. Leiterplatte (1) nach Anspruch 5, **dadurch gekennzeichnet, dass** über die mechanischen Bauteile (2) die Bewegung des Kontakts (4) und eine Steuerung des Durchflusses eines oder mehrerer flüssiger oder gasförmiger Medien bewirkt wird.

7. Leiterplatte (1) nach Anspruch 6, **dadurch gekennzeichnet, dass** die elektrischen Bauteile Leuchtmittel und/oder Heizmittel sind.

8. Zahnärztliches Gerät mit einem Schalter zur Schaltung mehrerer elektrischer Zustände, **gekennzeichnet durch** einen variablen Widerstand (70) nach einem der Ansprüche 1 bis 3 und/oder einen Spannungsteiler (80) nach Anspruch 4 und/oder eine Leiterplatte (1) nach einem der Ansprüche 5 bis 7.

9. Zahnärztliches Gerät nach Anspruch 8, **gekennzeichnet durch** Mittel zur Abgabe von relativ kleinen Mengen von flüssigen oder gasförmigen Medien wie Wasser oder Luft unter Aufheizung des Mediums.

10. Zahnärztliches Gerät nach Anspruch 9, **dadurch gekennzeichnet, dass** in Abhängigkeit von der Durchflussvorgabe für das oder die Medien eine elektrisch verarbeitbare Größe abgeleitet wird, die einer bestimmten Heizleistung entspricht.

## Claims

1. A variable resistor (70), comprising a contact bank (6) having at least two regions (K1, K2, K3) separated from each other by a slit (7, 8) and each connected to an assigned electrical resistance (R1, R2, R3), and further comprising at least one contact (4) adapted to move over said at least two regions (K1, K2, K3) of said contact bank (6) and having a contact surface (32) facing said contact bank (6), the geometry of said slit (7, 8) and said contact surface (32) is such that said contact (4), when in the region of said slit (7), first of all creates an electrical connection with the first region (K1) of the two regions (K1, K2) that are adjacent to said slit (7), then with both of said regions (K1, K2) simultaneously, and then, as the motion of said contact progresses, only with the second region (K2) thereof, wherein the geometrical course of said slit (7.8) exhibiting, at least in part, a direction component in the direction of motion of said contact.

2. A variable resistor (70) as defined in claim 1, **characterized in that** at least two regions (K1, K2) are interleaved with each other and are separated from each other by a meandering, saw edge-like, or square wave-like slit (7) which extends at right angles to the direction of motion of said contact surfaces (32).

3. A variable resistor (70) as defined in claim 2, **characterized in that** said slit (7, 8) has a slit width (t) corresponding to the respective spacing of said regions (K1, K2, K3, K4), such that the contact surface (32) has a first dimension in the direction of motion, a thickness (d), and a second dimension at right angles to the direction of motion, a width (b), that the slit width (t) is greater than the thickness (d) of said contact, that the width (b) of said contact surface (32) is greater than the greatest width (w) of said slit (7, 8) that is encountered by said contact (4) as it passes over said slit, as measured at right angles to the direction of motion.

4. A voltage divider (80), exhibiting an electrical input (71), an electrical output (72), and an electrical ground connection, and also a plurality of regions (K1, K2, K3, K4) with assigned electrical resistances (R1, R2, R3), **characterized by** a variable resistor (70) as defined in claim 3 having at least four regions (K1, K2, K3, K4).

5. A printed board (1) having electrical and mechanical components, **characterized by** a variable resistor (70) as defined in any one of claims 1 to 3 and/or by a voltage divider (80) as defined in claim 4.

6. A printed board (1) as defined in claim 5, **characterized in that** said mechanical components (2) serve to effect movement of said contact (4) and to control the flow of one or more liquid or gaseous media.

7. A printed board (1) as defined in claim 6, **characterized in that** said electrical components are illuminating and/or heating means.

8. A dental apparatus having a switch for switching to various electrical states, **characterized by** a variable resistor (70) as defined in any one of claims 1 to 3 and/or a voltage divider (80) as defined in claim 4 and/or a printed board (1) as defined in any one of claims 5 to 7.

9. A dental apparatus as defined in claim 8, **characterized by** means for dosing relatively small amounts of liquid or gaseous media such as water or air with heating thereof.

10. A dental apparatus as defined in claim 9, **characterized in that** from the flow setting for the medium or media an electrically variable parameter is derived for the creation of a specific heating power.

## Revendications

1. Résistance variable (70) comprenant une piste de contact (6) avec au moins deux zones (K1, K2, K3) séparées l'une de l'autre par une fente (7, 8) ayant chacune une résistance électrique (R1, R2, R3) associée, comprenant également au moins un contact mobile (4) pouvant se déplacer sur les au moins deux zones (K1, K2, K3) le long de la piste de contact (6) et muni d'une surface de contact (32) disposée vers la piste de contact (6), la forme géométrique de la fente (7, 8) et la surface de contact (32) étant configurées de telle sorte que le contact (4), dans la zone de la fente (7) entre tout d'abord en liaison électrique avec la première (K1) des zones (K1, K2) voisines de la fente (7), ensuite avec les deux zones (K1, K2) simultanément et en poursuivant le mouvement uniquement avec la deuxième zone (K2), **caractérisée en ce que** le tracé géométrique de la fente (7, 8) présente au moins partiellement une composante directionnelle en direction du sens du déplacement du contact.

2. Résistance variable (70) selon la revendication 1, **caractérisée en ce qu'**au moins deux zones (K1, K2) sont assemblées l'une à l'autre par tenon et entaille et sont séparées l'une de l'autre par une fente (7) en forme de méandre, en dents de scie ou réalisée sous la forme d'une onde rectangulaire, laquelle s'étend transversalement par rapport au sens de déplacement des surfaces de contact (32).

3. Résistance variable (70) selon la revendication 2, **caractérisée en ce que** la fente (7, 8) présente une largeur de fente (T) correspondant à l'espacement respectif des zones (K1, K2, K3, K4), que la surface de contact (32) présente une première dimension dans le sens du déplacement, l'épaisseur (D), et une deuxième dimension transversalement par rapport au sens du déplacement, la largeur (B), que la largeur de fente (T) est supérieure à l'épaisseur (D) du contact, que la largeur (B) de la surface de contact (32) est supérieure à un plus grand espace (W) de la fente (7, 8) franchie par le contact (4) qui est présent dans le sens transversal par rapport au sens de déplacement.

4. Diviseur de tension (80), présentant une entrée électrique (71), une sortie électrique (72) et une mise à la terre électrique ainsi que plusieurs zones (K1, K2, K3, K4) avec des résistances électriques (R1, R2, R3, R4) associées, **caractérisé par** une résistance variable (70) selon la revendication 3 comprenant au moins quatre zones (K1, K2, K3, K4).

5. Circuit imprimé (1) comprenant des composants électriques et mécaniques, **caractérisé par** une résistance variable (70) selon l'une des revendications 1 à 3 et/ou par un diviseur de tension (80) selon la revendication 4.

6. Circuit imprimé (1) selon la revendication 5, **caractérisé en ce que** le mouvement du contact (4) et une commande du débit d'un ou de plusieurs fluides liquides ou gazeux sont réalisés par le biais de composants mécaniques (2).

7. Circuit imprimé (1) selon la revendication 6, **caractérisé en ce que** les composants électriques sont des moyens d'éclairage et/ou des moyens de chauffage.

8. Appareil dentaire comprenant un commutateur pour commander plusieurs états électriques, **caractérisé par** une résistance variable (70) selon l'une des revendications 1 à 3 et/ou par un diviseur de tension (80) selon la revendication 4 et/ou un par un circuit imprimé (1) selon l'une des revendications 5 à 7.

9. Appareil dentaire selon la revendication 8, **caractérisé par** des moyens pour délivrer de relativement petites quantités de fluides liquides ou gazeux tels que de l'eau ou de l'air en chauffant le fluide.

10. Appareil dentaire selon la revendication 9, **caractérisé en ce qu'**une grandeur pouvant être traitée électriquement et correspondant à une puissance de chauffage donnée est déduite en fonction du débit réglé pour le ou les fluides.
